# DEMANDE DE BREVET EUROPEEN

(11) **EP 1 334 880 A1**
(43) Date de publication de la demande: **13.08.2003**
(21) Numéro de dépôt: 03290244.7
(22) Date de dépôt: 31.01.2003
(51) Int. Cl.: B60R 13/08, B62D 25/16

(54) **Pare-boue formant une pièce d'isolation phonique latérale d'un compartiment moteur**

(30) Priorité: 05.02.2002 FR 0201351
(71) Demandeur: COMPAGNIE PLASTIC OMNIUM, 69007 Lyon (FR)
(72) Inventeur: Decker, Laurent, 69100 Villeurbanne (FR); Gilotte, Philippe, 78180 Montigny le Bretonneux (FR); Fayt, Arnold, 39240 Aromas (FR)
(74) Mandataire: Remy, Vincent Noel Paul

(57) **Abrégé**

L'invention concerne une pièce d'isolation phonique d'un véhicule automobile comportant un compartiment moteur et, latéralement à ce compartiment moteur, un volume réservé pour le débattement d'une roue du véhicule, caractérisée par le fait qu'elle est agencée pour former un écran acoustique (6) entre ledit compartiment moteur et ledit volume.

L'invention concerne également un pare-boue constituant une telle pièce d'isolation phonique et un module latéral formé à partir d'un tel pare-boue.

## Description

La présente invention concerne une pièce d'isolation phonique pour le traitement des bruits de moteur à travers la face verticale latérale du compartiment moteur d'un véhicule automobile, un pare-boue remplissant cette fonction et un module latéral formé à partir d'un tel pare-boue.

On sait que le compartiment moteur d'un véhicule automobile est le siège de bruits importants qui sont engendrés par le fonctionnement du moteur à explosion.

Pour réduire les émissions sonores vers l'extérieur du véhicule, il est connu de doubler d'un isolant phonique la face intérieure du capot moteur et de placer sous le moteur un écran qui absorbe les émissions sonores et empêche le bruit du moteur de se propager vers l'extérieur du véhicule par réflexion sur la chaussée.

Ces différentes mesures ont des effets atténuateurs très importants sur les émissions de bruit de moteur vers l'extérieur du véhicule mais ne sont pas totalement satisfaisantes car les véhicules à moteur à combustion interne demeurent assez bruyants en circulation urbaine.

Les auteurs de la présente invention ont recherché les causes de cette nuisance et ont établi que les ouvertures qui se trouvent au voisinage des passages de roues, de chaque côté du compartiment moteur, constituent des sources de fuites non négligeables, contrairement à ce qui avait été considéré jusqu'à présent.

Ainsi, les inventeurs ont établi que chaque région latérale du compartiment moteur comprise entre un support d'aile et le longeron situé du même côté du véhicule doit être étanchéifiée aux bruits pour que le véhicule devienne moins bruyant de façon notable, et en particulier dans la région latérale du compartiment moteur qui n'est pas recouverte par l'aile, en raison de la présence d'un volume réservé pour le débattement d'une roue.

Selon l'invention, on entend par support d'aile la pièce appartenant à la structure du véhicule qui remplit la fonction de supporter l'aile. Cette pièce est quelquefois aussi désignée « renfort de doublure d'aile », « renfort de côté d'auvent » ou encore « longeron supérieur ». De même, le longeron prend quelquefois l'appellation de « brancard ».

En plus de la région du compartiment moteur comprise entre le support d'aile et le longeron, les inventeurs ont mis en évidence d'autres sources de fuites, parmi lesquelles :
- l'orifice de passage de l'arbre de transmission,
- l'orifice de passage de la barre de crémaillère,
- l'orifice de passage de la barre anti-roulis,
- l'orifice de passage du triangle de suspension,
- l'orifice de passage de l'amortisseur,
- le jeu présent entre le capot moteur et l'aile avant,
- le jeu présent entre le projecteur et l'aile avant.

Pour remédier à ces défauts des véhicules antérieurs, la présente invention propose de "colmater" ces différentes sources de fuites à l'aide d'une pièce spécifique.

L'objet de l'invention est donc une pièce d'isolation phonique d'un véhicule automobile comportant un compartiment moteur et, latéralement à ce compartiment moteur, un volume réservé pour le débattement d'une roue du véhicule. Cette pièce se caractérise par le fait qu'elle est agencée pour former un écran acoustique entre ledit compartiment moteur et ledit volume.

De préférence, la pièce d'isolation phonique selon l'invention s'étend entre un support d'aile et le longeron situé du même côté du véhicule.

Dans un mode de réalisation particulier de l'invention, la pièce d'isolation phonique comporte un revêtement phoniquement absorbant et/ou isolant sur sa face dirigée vers le compartiment moteur, pour absorber au moins une partie des émissions sonores.

Dans un autre mode de réalisation de l'invention, compatible avec le précédent, la pièce d'isolation phonique supporte un joint qui s'applique contre le capot moteur, de manière à obturer le passage mettant en communication le compartiment moteur et l'extérieur du véhicule à travers le jeu présent entre le capot moteur et l'aile du véhicule.

Dans une variante, ce joint est remplacé par une nervure d'un seul tenant avec la pièce d'isolation phonique, venant s'appliquer directement contre un matériau phoniquement absorbant et/ou isolant garnissant la face inférieure du capot.

Grâce à ce moyen, l'aile et le capot moteur peuvent rester à distance l'un de l'autre avec un jeu déterminé par des critères d'assemblage, sans fuite sonore.

Dans un mode de réalisation particulier de l'invention, la pièce d'isolation phonique comporte un bord arrière se raccordant de manière continue avec un bord arrière d'une pièce de carrosserie supportée par ladite pièce.

En outre, continu ou non, ce bord arrière de la pièce selon l'invention peut former une portée verticale arrière servant de butée de positionnement longitudinal à la pièce de carrosserie.

Ainsi, la pièce de carrosserie convenablement positionnée longitudinalement par rapport à la pièce d'isolation phonique peut servir de référentiel pour la fixation de la pièce d'isolation phonique sur le véhicule, de sorte qu'il suffit de positionner la pièce de carrosserie par rapport à son propre environnement pour obtenir la position longitudinale de la pièce d'isolation phonique sur le véhicule.

Dans un autre mode de réalisation de l'invention, également compatible avec les précédents, la pièce d'isolation phonique se prolonge en-dessous du longeron et obture la région dans laquelle se situe l'arbre de roue, en comportant un trou traversant dimensionné au plus juste de manière à laisser un passage le plus petit possible autour de l'arbre de roue, ce trou traversant étant de préférence garni d'un joint qui relie la pièce acoustique audit arbre de roue.

Un tel joint peut être du type à brosses par exemple, ou encore être constitué par un soufflet. Il peut être surmoulé ou rapporté sur la pièce.

La pièce d'isolation phonique selon l'invention se situe au voisinage immédiat d'une autre pièce du véhicule qui remplit traditionnellement une tout autre fonction qu'une fonction acoustique vis-à-vis des bruits du moteur, à savoir le pare-boue. Le pare-boue est une pièce généralement souple qui enrobe la partie supérieure de la roue à l'intérieur de l'aile et évite que des projections provenant du pneu ne viennent frapper l'intérieur de l'aile. Le pare-boue vise donc à protéger l'intérieur de l'aile, ce qui a pour conséquence d'empêcher la génération de bruits dus aux chocs de matières projetées contre l'aile ou aux frottements dus au roulement du pneumatique sur la chaussée, mais cette fonction ne lutte aucunement contre les émissions sonores du moteur.

Toutefois, dans le cadre de l'invention, la pièce d'isolation phonique peut, selon un mode de réalisation particulier, être constituée par une partie du pare-boue.

Dans cette hypothèse, le pare-boue comporte une partie verticale qui sert d'écran entre le support d'aile et le longeron du compartiment moteur du véhicule et, éventuellement, se prolonge en-dessous du longeron pour obturer la région de passage de l'arbre de roue. Solidaire de cette partie verticale, une partie sensiblement en arc de cercle complète le pare-boue pour lui faire remplir sa fonction traditionnelle d'enrobage de roue.

Dans l'hypothèse d'un pare-boue servant également de pièce acoustique, l'invention a également pour objet un pare-boue tel que décrit ci-dessus, ainsi qu'un pare-boue agencé pour pouvoir supporter au moins un équipement tel que :
- réservoir de lave projecteur et de lave glace,
- répétiteur de clignotant,
- jauge de réservoir,
- calculateur,
- boîte à fusibles,
- boîtier de connexion moteur.

Afin de pouvoir supporter des équipements, le pare-boue selon l'invention peut comporter une partie structurelle qui est de préférence située dans sa région avant et qui prend elle-même appui sur la structure du véhicule, par exemple sur l'un de ses longerons.

Il est remarquable que cet appui ne requiert aucun positionnement précis puisqu'il n'a pour but que de supporter des équipements internes.

La partie structurelle proprement dite peut être obtenue par surmoulage d'un renfort métallique ou d'un matériau de renfort tel que le Twintex® de la société Vetrotex, par comoulage avec une matière plus rigide ou renforcée, ou encore par apport d'une pièce rigide assujettie au pare-boue par des moyens appropriés.

Le pare-boue renforcé peut alors servir de support aux équipements suivants :
- projecteur,
- radiateur d'intercooler avec éventuellement ses conduites de circulation d'air,
- batterie.

Dans un mode de réalisation particulier, la partie structurelle du pare-boue sert de support à l'aile du véhicule.

Dans ce cas, l'aile peut être montée sur le pare-boue en dehors de la chaîne de montage du véhicule. Le pare-boue avec sa partie structurelle constitue alors un module latéral apte à supporter différents équipements et surtout l'aile, et ce de manière autonome, c'est-à-dire hors la présence de la structure du véhicule.

Pour traiter la fuite due au passage de l'amortisseur à travers le pare-boue, l'invention propose, dans un mode de réalisation particulier du pare-boue, un capuchon qui vient coiffer l'amortisseur et qui se relie au pare-boue. Ce capuchon forme en quelque sorte une excroissance du pare-boue formant une enveloppe continue à l'intérieur de laquelle se trouve l'intégralité de l'amortisseur.

Le capuchon est de préférence une pièce séparée rapportée sur pare-boue, qui peut par exemple être réalisée sous la forme d'une chaussette déformable ou d'un soufflet.

Ainsi, le capuchon et le pare-boue peuvent être montés séparément et assemblés sur le véhicule avec une liaison phoniquement étanche pour former l'enveloppe continue précitée.

La présente invention a également pour objet un module latéral constitué d'un pare-boue tel que décrit ci-dessus, supportant une pièce latérale structurelle portant un bloc optique et une aile montée sur le pare-boue et sur la pièce latérale structurelle.

Dans un mode de réalisation particulier de cette invention, le pare-boue peut également supporter un réservoir de lave glace et/ou de lave projecteur situé entre l'écran acoustique et l'aile.

Afin de faciliter la compréhension de l'invention, des modes de réalisation de celle-ci vont maintenant être décrits à l'aide des dessins annexés dans lesquels :
- la figure 1 est une vue en perspective de trois quart de la partie avant gauche d'un véhicule automobile, prise de l'extérieur,
- la figure 2 est une vue en perspective de la même partie du véhicule, prise depuis l'intérieur du véhicule,
- la figure 3 est une vue en perspective d'un volume réservé au débattement de la roue avant gauche d'un autre véhicule automobile,
- la figure 4 est une vue analogue à la figure 3 représentant une variante de réalisation,
- la figure 5 représente en perspective deux composants d'une pièce d'isolation phonique selon un mode de réalisation de l'invention,
- la figure 6 montre la pièce de la figure 5 sur laquelle on fixe des organes complémentaires,
- la figure 7 est une section horizontale selon VII-VII de la figure 6 après fixation des organes complémentaires,
- la figure 8 représente la pièce de la figure 6 après ajout des organes complémentaires, sur laquelle on fixe une aile du véhicule pour obtenir un module latéral,
- la figure 9 est un agrandissement du détail IX de la figure 7,
- la figure 10 représente le module de la figure 8 en cours de montage sur la structure du véhicule, vue de l'extérieur,
- la figure 11 est une vue analogue à la figure 10, prise de l'intérieur du véhicule,
- la figure 12 est une section verticale schématique d'un écran acoustique positionné sur un véhicule, prise dans un plan passant par l'axe d'un amortisseur dudit véhicule.

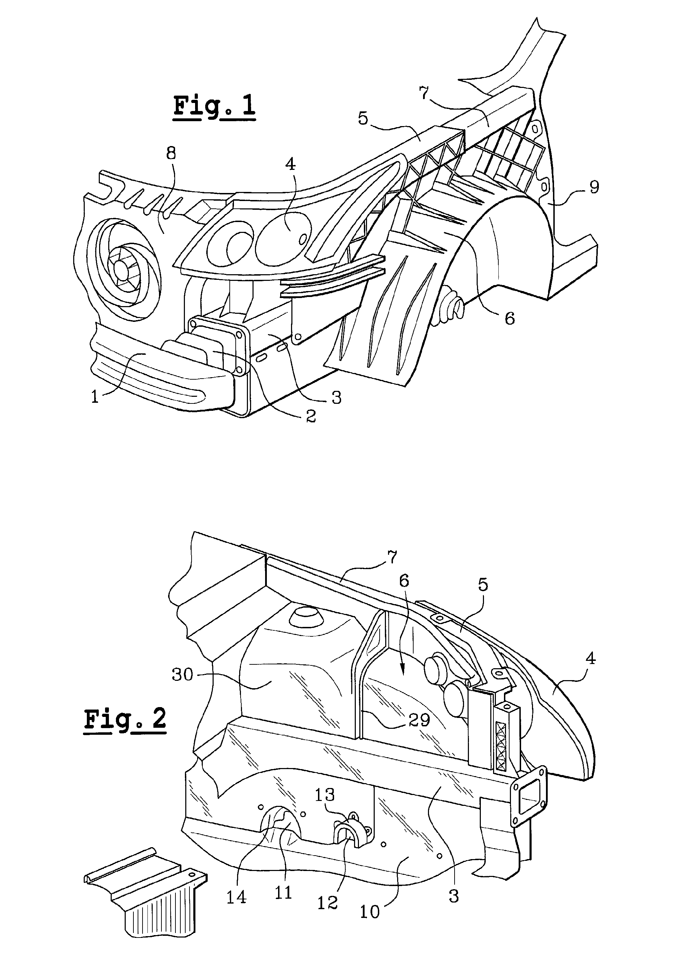

Sur la figure 1, on voit la partie avant gauche d'un véhicule, dont les constituants, énumérés d'avant en arrière, sont une poutre de chocs 1, un absorbeur de chocs 2, un longeron 3 appartenant au châssis du véhicule, un bloc optique 4 supporté par une pièce latérale structurelle ou quart avant 5, une pare-boue 6, un support d'aile 7.

Cet ensemble se raccorde, dans sa région avant, à une cassette de refroidissement 8, structure autonome accueillant un groupe moto ventilateur et un radiateur, et, dans sa région arrière, à l'encadrement 9 d'une portière.

Sur les figures, on a volontairement omis le capot moteur, qui recouvre le compartiment moteur en étant généralement garni sur sa face inférieure d'un matériau ayant de bonnes propriétés d'isolation phonique.

Le dessous du compartiment moteur est obturé par un écran inférieur 10 qui isole le groupe moteur de la chaussée et empêche des fuites de bruit vers l'extérieur du véhicule, par réflexion sur la chaussée.

D'autres dispositifs d'insonorisation peuvent être prévus à l'arrière du moteur, dans le tablier séparant le compartiment moteur et l'habitacle.

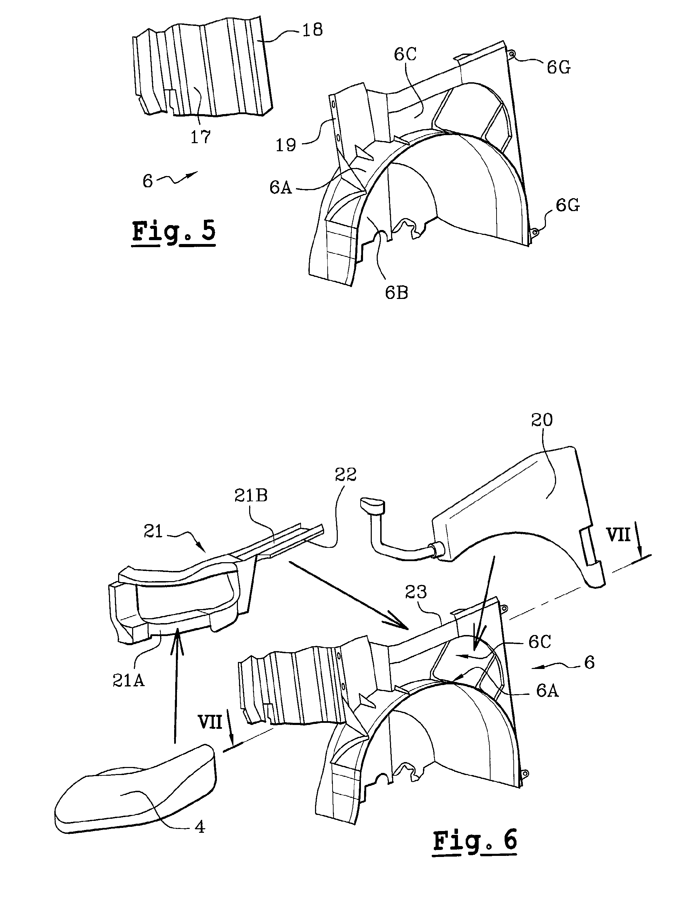

Le pare-boue 6, représenté seul sur la figure 5, est réalisé en un matériau souple courant, comme le polypropylène.

Il comprend une partie sensiblement cylindrique 6A s'étendant au dessus de la moitié supérieure de la roue (non représentée) et deux parties sensiblement verticales 6B, 6C qui s'étendent, pour l'une, dite partie basse 6B, entre la partie cylindrique 6A et le longeron 3, et pour l'autre, désignée partie haute 6C, entre la partie cylindrique 6A et le support d'aile 7.

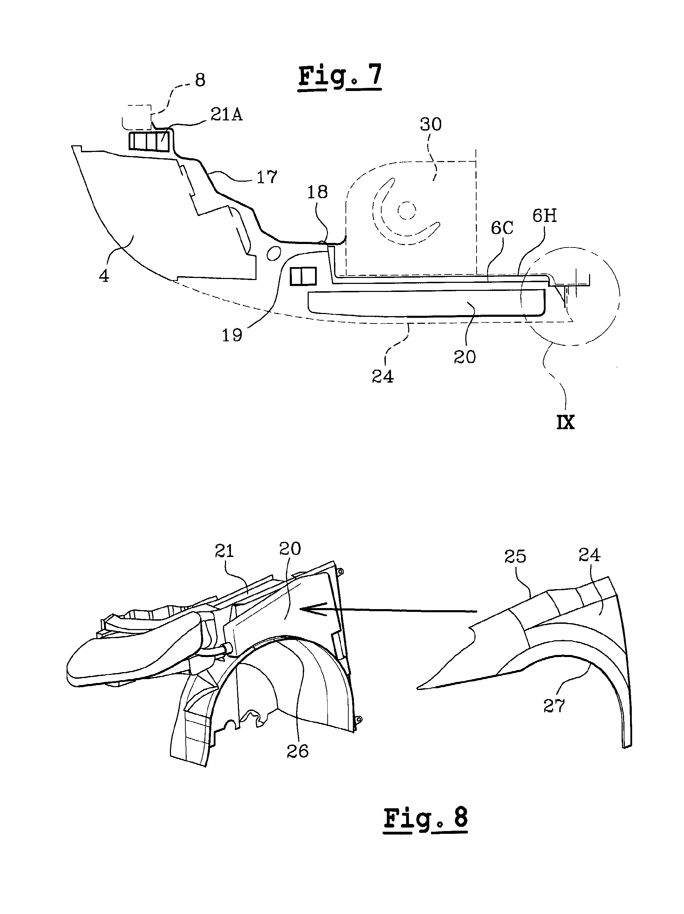

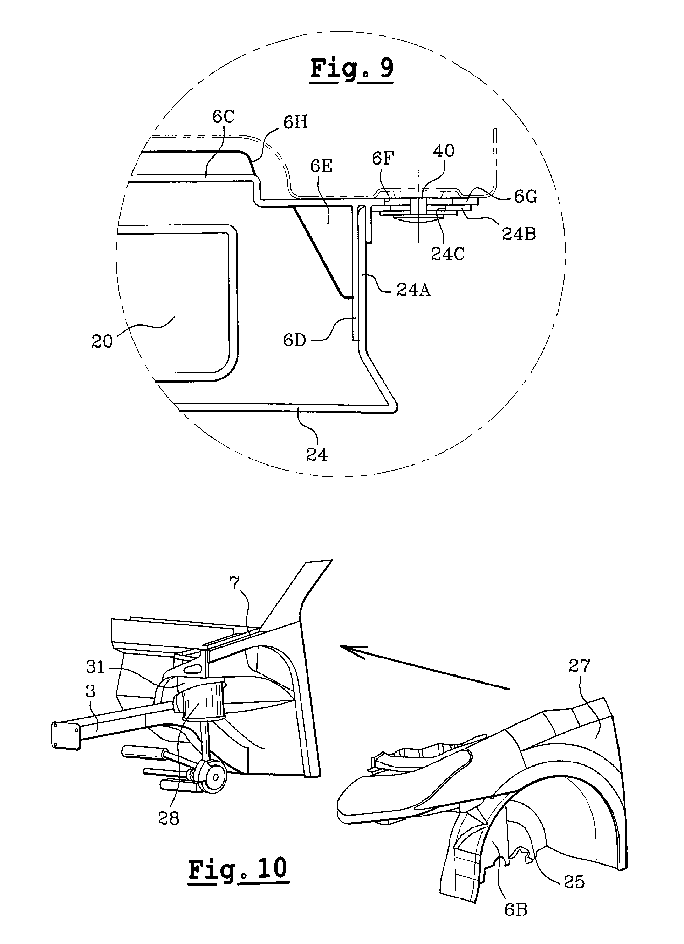

Les deux parties 6B, 6C sensiblement verticales du pare-boue sont revêtues, par exemple par mise en oeuvre d'un procédé de surmoulage, sur leur face dirigée vers le compartiment moteur du véhicule, d'une feuille de mousse 6H (visible en figures 7 et 9) ou d'un autre matériau acoustiquement absorbant, qui a pour fonction d'éviter la transmission à l'écran acoustique d'ondes sonores provenant du compartiment moteur.

Le pare-boue muni de ses deux parties haute et basse constitue un écran acoustique fermant le compartiment moteur au niveau de la roue.

Comme on le voit sur la figure 2, la partie basse verticale 6A du pare-boue se termine à hauteur de l'axe de la roue, où elle comporte deux dégagements 11 et 12 pour le passage d'une barre de crémaillère et de l'essieu, et se raccorde à l'écran inférieur 10 obturant le dessous du moteur.

Chaque dégagement 11, 12 peut être garni d'un élément d'isolation, tel qu'un soufflet ou un demi manchon, ou encore des lèvres souples, rapportés, ledit élément d'isolation étant surmoulé ou co-moulé avec le reste du pare-boue.

Dans l'exemple des figures 1 et 2, le passage d'essieu est muni d'un demi manchon 13 tandis que le passage de la barre de crémaillère est garni d'un soufflet 14, le demi manchon et le soufflet étant tous deux rapportés.

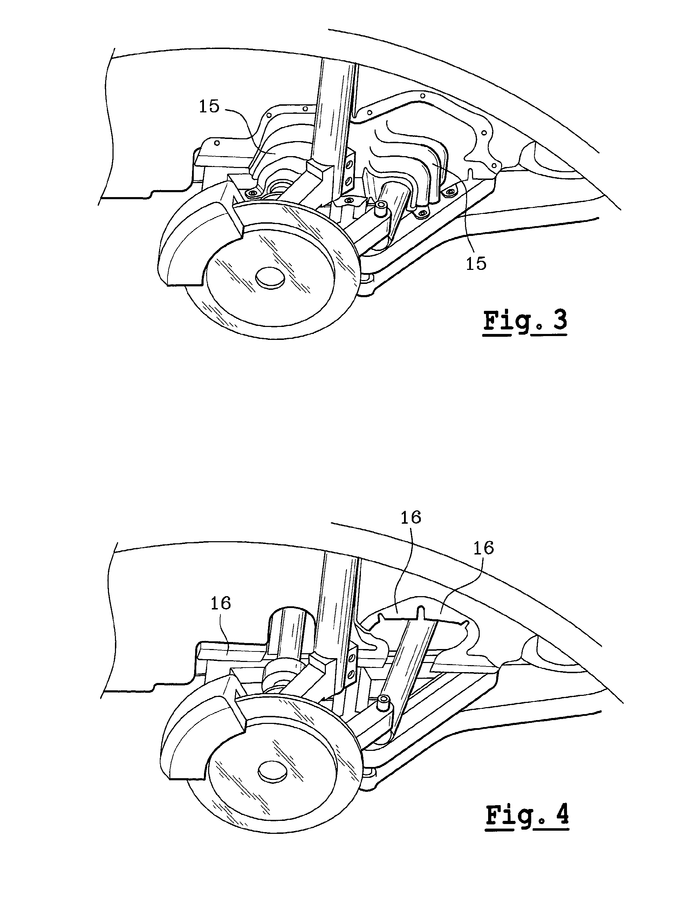

Dans l'exemple de la figure 3, tous les passages, y compris ceux de barres de torsion, sont garnis de soufflets rapportés 15.

Dans l'exemple de la figure 4, les garnitures sont des lèvres souples 16 formées d'un seul tenant avec l'écran acoustique.

A l'aide des figures 5 à 11, on va maintenant décrire les différents composants d'un module latéral constitué à partir de l'écran acoustique formé par le pare-boue.

Comme le représente la figure 5, l'élément central du module latéral est le pare-boue 6 proprement dit, comprenant sa partie sensiblement cylindrique 6A destinée à enrober la moitié supérieure de la roue et ses deux parties basse 6B et haute 6C sensiblement verticales.

On rapporte sur ce pare-boue un écran complémentaire 17, par exemple en feutre thermoformé destiné à prendre place derrière le bloc optique 4 (non représenté en figure 5) devant être apporté sur le véhicule par le pare-boue, comme cela sera décrit ultérieurement.

Cet écran complémentaire 17 a pour rôle de supprimer les fuites passant autour du bloc optique 4 (qui n'est pas encore monté à ce stade), en étant assujetti à la partie verticale haute du pare-boue par encliquetage le long de son bord arrière 18 sur un bord avant 19 de ladite partie verticale haute. A l'avant, l'écran complémentaire sera solidarisé à une pièce latérale structurelle qui sera décrite ultérieurement.

L'ensemble ainsi obtenu est apte à recevoir différents organes complémentaires, comme on le voit à la figure 6.

D'une part, un réservoir 20 de lave glace et/ou de lave projecteurs se loge sur la partie sensiblement cylindrique 6A du pare-boue, dans l'espace laissé libre entre sa partie verticale haute 6C et l'aile qui, à ce stade, n'a pas encore été rapportée sur le module latéral. Le positionnement du réservoir 20 à cet endroit présente deux avantages. Le premier est une occupation optimale de l'espace, le second est une élimination du risque de cloquage de l'aile, ledit réservoir servant d'appui interne empêchant la déformation vers l'intérieur de l'aile en cas de pression exercée sur sa peau externe.

D'autre part, le pare-boue reçoit le bloc optique 4, en avant de son écran complémentaire 17 précédemment décrit, avec interposition d'une pièce latérale structurelle 21 qui sera désignée « quart » dans la suite de la description.

Ce quart 21 est une pièce rigide, réalisée en polypropylène renforcé de fibres et munie de nervures de rigidification, et comprend une portion avant 21A formant un cadre apte à recevoir le bloc optique 4 et une portion arrière 21B formant une poutre destinée à être assujettie au support d'aile appartenant au châssis du véhicule.

Comme précédemment indiqué, le cadre 21A offre un moyen d'encliquetage avec un bord avant de l'écran complémentaire 17, permettant le montage et le démontage de ce dernier pour la maintenance du bloc optique.

La figure 7 montre notamment l'encliquetage de l'écran complémentaire par son bord avant 18A sur le cadre 21A et par son bord arrière 18 sur le bord 19 de la partie verticale haute. Sur cette figure, on a représenté en pointillés la chapelle d'amortisseur 30, la cassette de refroidissement 8 et l'aile 24 qui, à ce stade, ne sont pas encore assemblés au pare-boue.

La poutre 21B se fixe sur le pare-boue par vissage ou encliquetage le long d'un de ses bords longitudinaux 22, sur le bord supérieur 23 de la partie verticale haute 6C du pare-boue.

On comprend que le pare-boue n'est pas suffisamment rigide pour reprendre les efforts transmis par le quart du fait du poids du bloc optique lors de l'utilisation du véhicule. Toutefois, la rigidité du pare-boue est suffisante, dans sa partie haute qui est ainsi sollicitée dans son propre plan principal, pour supporter temporairement le quart et le bloc optique, tant que l'ensemble est conservé statique en attendant son montage sur le véhicule.

En revanche, lors du montage sur le véhicule, la poutre 21B du quart coïncide avec le support d'aile 7 du châssis et y est assujettie fermement. Le support d'aile 7 reprend alors directement l'intégralité des efforts subis par le quart, soulageant ainsi le pare-boue et garantissant le maintien du réglage de référencement du bloc optique pendant l'utilisation du véhicule.

En d'autres termes, le pare-boue sert de support temporaire au bloc optique et au quart.

En dernier lieu, on apporte l'aile 24 directement sur le pare-boue, comme on le voit à la figure 8.

L'aile 24 se fixe sur le quart 21 par son bord supérieur 25, à l'aide d'une fixation glissante (non représentée) dont le détail ne sera pas fourni dans le cadre de la présente description, et s'emboîte autour du bord arrondi 26 de la partie 6A sensiblement cylindrique du pare-boue, grâce à son rebord inférieur 27 qui est rentrant. L'aile se trouve ainsi tendue entre son bord supérieur 25 et son rebord inférieur arrondi 27, ce qui lui confère une certaine rigidité, indépendamment de son montage sur le véhicule.

En outre, comme le montre le détail fourni par la figure 9, l'aile 24 est maintenue le long de son bord arrière vertical 24A par une portée 6D rigidifiée par des nervures 6E. Cette portée 6D assure un complément de rigidification de l'aile et permet une mise en référence longitudinale de l'ensemble du pare-boue et des pièces portées par le pare-boue par positionnement longitudinal de l'aile par rapport aux pièces de carrosserie environnantes. En d'autres termes, au lieu de positionner le pare-boue sur le châssis et de mettre ensuite l'aile en référence par rapport aux autres pièces, on positionne directement l'ensemble constitué du pare-boue 6 formant un écran acoustique vertical, du réservoir 20, du quart 21 et du bloc optique 4, lequel module autonome est apporté d'un seul tenant sur un véhicule en cours de montage.

Lors de cet apport, illustré par les figures 8 et 9, l'aile 24 se fixe à l'encadrement 9 de portière, la poutre du quart au support d'aile 7 et le cadre du quart au longeron 3. L'extrémité avant du cadre du quart recevra ensuite la cassette de refroidissement 8 reliant les deux modules latéraux.

Les mises en références s'effectuent par rapport au châssis, le support d'aile procurant les références horizontale et latérale et le cadre de portière la référence longitudinale. Un appui supplémentaire est fourni par le longeron pour supporter par exemple le poids du bloc optique.

Comme on le voit sur la figure 9, la fixation de l'aile sur le châssis s'effectue à l'aide de rivets 40 au travers d'orifices de fixation 24C réalisés dans un bord vertical arrière 24B de l'aile. Chaque orifice 24C coïncide avec un orifice 6F de plus grand diamètre formé dans une patte de fixation 6G du pare-boue. Les orifices 24C et 6F laissent un jeu autour du rivet 40 afin que le positionnement du module soit imposé par l'aile, laquelle transmet la mise en référence au pare-boue non pas par l'orifice 6G mais par la portée 6D.

Cette portée 6D constitue par ailleurs un bord arrière du pare-boue qui se raccorde de manière continue avec le bord arrière de l'aile, prévenant ainsi toutes fuites de bruits entre l'aile et le montant de portière, sans nécessiter l'apport d'aucun joint spécifique.

La souplesse du pare-boue lui permet, après avoir porté et prépositionné ces pièces, de s'adapter à la configuration géométrique du module imposée par ces mises en référence.

De plus, dans le cas très fréquent où l'essieu de la roue comporte des amortisseurs 28 (figure 10), la souplesse du pare-boue permet de le déformer pour le faire passer derrière l'amortisseur est reconstituer l'écran acoustique entre le compartiment moteur et ledit amortisseur.

A cet effet, le pare-boue comporte une fente verticale 25 sur toute la hauteur de sa partie basse 6B, entre son bord inférieur 26 et une ouverture 27 ménagée dans la partie cylindrique 6A pour le passage de l'amortisseur, comme on le voit notamment à la figure 9. Le pare-boue peut ainsi être ouvert par sa fente 25 puis enroulé autour de l'amortisseur 28.

Conformément à l'invention, les fuites sonores entre le compartiment moteur du véhicule et l'espace réservé au débattement de la roue sont limitées non seulement par la présence de l'écran acoustique vertical précédemment décrit, mais également par une bonne étanchéité acoustique des frontières de cet écran acoustique avec son voisinage.

C'est ainsi que le bord supérieur de la partie verticale haute du pare-boue, ainsi que le bord supérieur du quart, sont positionnés de manière à entrer en contact direct avec la couche d'insonorisation garnissant la face interne du capot moteur.

De même, l'invention prévoit l'obturation étanche du canal acoustique dû au passage de l'amortisseur à travers le pare-boue, selon deux modes de réalisation.

Selon le premier mode de réalisation, visible en figure 2, une lèvre souple 29 formée sur le pare-boue vient prendre appui contre la paroi extérieure de la chapelle d'amortisseur 30. Dans ce cas, le passage de l'amortisseur à travers le pare-boue est laissé sans étanchéité, ce qui est sans conséquence car le compartiment moteur ne communique pas avec l'intérieur de la chapelle d'amortisseur, grâce à la lèvre souple 29.

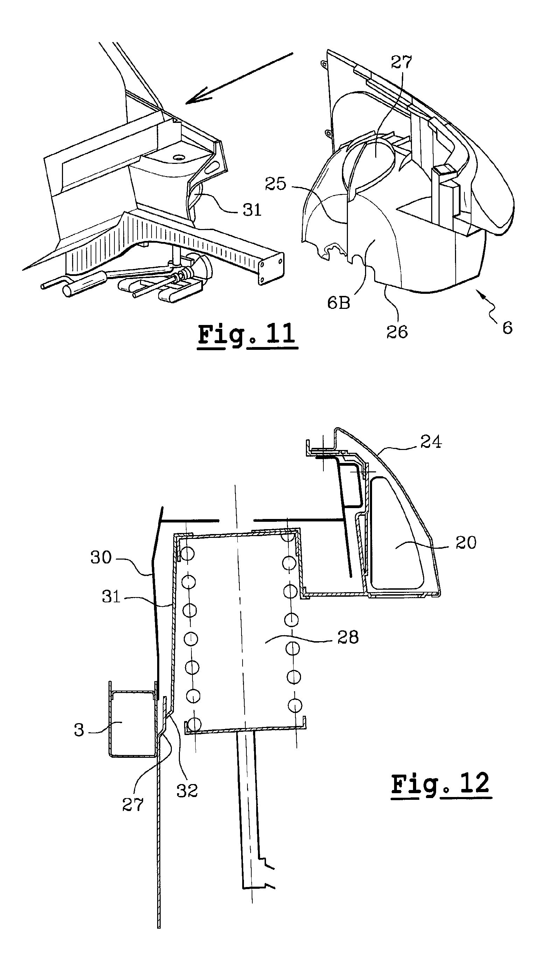

Selon un deuxième mode de réalisation, illustré par les figures 10 et 11 et mieux visible sur la figure 12, le pare-boue est prolongé vers le haut par un capuchon 31 qui prend naissance à la périphérie de l'orifice 27 permettant le passage de l'amortisseur 28 et qui s'étend jusqu'au dessus dudit amortisseur, de sorte que l'amortisseur se trouve enfermé dans le même volume que la roue et qu'aucun passage n'est laissé, y compris autour de l'amortisseur, entre le compartiment moteur et ce volume.

En pratique, le capuchon 31 est une pièce séparée en forme de pot, qui est retournée sur l'amortisseur et dont le fond est serré, lors du montage de l'amortisseur, entre ce dernier et la chapelle d'amortisseur.

Lors de sa mise en place par écartement de sa fente, le pare-boue s'enroule autour de la base du capuchon. Il y est retenu verticalement par un bord externe 32 en collerette de ce dernier, comme on le voit sur la figure 12.

Dans ce cas, le pare-boue complété par le capuchon 31 forme un écran continu enveloppant la roue et l'amortisseur.

Il est bien entendu que les modes de réalisation décrits ci-dessus ne sont fournis qu'à titre d'exemples et qu'aucune limitation de l'invention ne doit en être déduite. Aucune modification de ces exemples ne sortirait du cadre de l'invention.

## Revendications

1. Pièce d'isolation phonique d'un véhicule automobile comportant un compartiment moteur et, latéralement à ce compartiment moteur, un volume réservé pour le débattement d'une roue du véhicule, **caractérisée par le fait qu'**elle est agencée pour former un écran acoustique (6) entre ledit compartiment moteur et ledit volume, et en ce qu'elle s'étend entre un support d'aile (7) et le longeron (3) situé du même côté du véhicule.

2. Pièce selon la revendications 1, **caractérisée en ce qu'**elle comporte un revêtement phoniquement absorbant et/ou isolant sur sa face dirigée vers le compartiment moteur, pour absorber au moins une partie des émissions sonores.

3. Pièce selon la revendications 1 ou 2, **caractérisée en ce qu'**elle supporte un joint qui s'applique contre un capot recouvrant le compartiment moteur, de manière à obturer un passage mettant en communication le compartiment moteur et l'extérieur du véhicule à travers un jeu présent entre le capot et une aile avant du véhicule.

4. Pièce selon la revendication 1 ou 2, **caractérisée en ce qu'**elle comporte une nervure venant s'appliquer directement contre un matériau phoniquement absorbant et/ou isolant garnissant la face inférieure d'un capot recouvrant le compartiment moteur.

5. Pièce selon l'une quelconque des revendications 1 à 4, **caractérisée en ce qu'**elle comporte un écran complémentaire (17), par exemple en feutre thermoformé, destiné à prendre place derrière un bloc optique (4) devant être apporté sur le véhicule par le pare-boue, dans le but de supprimer les fuites passant autour dudit bloc optique.

6. Pièce selon l'une quelconque des revendications 1 à 5, **caractérisée en ce qu'**elle comporte un bord arrière (6D, 6G) se raccordant de manière continue avec un bord arrière (24A) d'une pièce de carrosserie (24) supportée par ladite pièce.

7. Pièce selon l'une quelconque des revendications 1 à 6, **caractérisée en ce qu'**elle comporte une portée verticale arrière (6D) servant de butée de positionnement longitudinal à une pièce de carrosserie (24) portée par ladite pièce.

8. Pièce selon l'une quelconque des revendications 1 à 7, **caractérisée en ce qu'**elle se prolonge en-dessous du longeron (3) et obture une région dans laquelle se situe un arbre de roue, ladite pièce comportant un trou traversant (11, 12) dimensionné au plus juste de manière à laisser un passage aussi petit que possible autour de l'arbre de roue, ce trou traversant étant de préférence garni d'un joint (13, 14, 15, 16) qui relie la pièce acoustique audit arbre de roue.

9. Pièce selon la revendication 8, **caractérisée en ce que** le joint est du type à brosses.

10. Pièce selon l'une quelconque des revendications 1 à 19, **caractérisée en ce qu'**elle est constituée par une partie d'un pare-boue (6).

11. Pare-boue de véhicule automobile, **caractérisé en ce qu'**il comporte, outre une partie sensiblement cylindrique (6A) destinée à enrober la partie supérieure d'une roue, une partie verticale (6B, 6C) formant un écran acoustique entre le compartiment moteur du véhicule et un volume latéral à ce compartiment moteur, réservé pour le débattement d'une roue, et **en ce que** sa partie verticale s'étend entre un support d'aile (7) et un longeron (3) situé du même côté du véhicule.

12. Pare-boue selon la revendication 11, **caractérisé en ce qu'**il est agencé pour supporter l'un au moins des équipements suivants :
- réservoir (20) de lave projecteur et de lave glace,
- répétiteur de clignotant,
- jauge de réservoir,
- calculateur,
- boîte à fusibles,
- boîtier de connexion moteur.

13. Pare-boue selon la revendication 11 ou 12, **caractérisé en ce qu'**il comporte une partie structurelle (21) qui est de préférence située dans sa région avant et qui prend elle-même appui sur un des longerons (3) du véhicule.

14. Pare-boue selon la revendication 13, **caractérisé en ce qu'**il supporte l'un au moins des éléments suivants :
- projecteur (4),
- radiateur d'intercooler avec éventuellement ses conduites de circulation d'air,
- batterie.

15. Pare-boue selon l'une quelconque des revendications 11 à 14, **caractérisé en ce qu'**il comprend un capuchon (31) qui vient coiffer l'amortisseur et qui se relie à la partie sensiblement cylindrique dudit pare-boue.

16. Module latéral constitué d'un pare-boue selon l'une quelconque des revendications 11 à 15, supportant une pièce latérale structurelle (21) portant un bloc optique (4) et une pièce de carrosserie (24) montée sur le pare-boue et sur la pièce latérale structurelle.

17. Module selon la revendication 16, **caractérisé en ce que** le pare-boue supporte également un réservoir (20) de lave glace et/ou lave projecteur situé entre l'écran acoustique et l'aile.
